(19) **Europäisches Patentamt**
**European Patent Office**
**Office européen des brevets**

(11) **EP 2 892 320 B1**

(12) **EUROPEAN PATENT SPECIFICATION**

(45) Date of publication and mention
of the grant of the patent:
**23.01.2019 Bulletin 2019/04**

(51) Int Cl.:
**A01G 9/18** (2006.01)   **A01G 9/24** (2006.01)

(21) Application number: **12821317.0**

(22) Date of filing: **19.12.2012**

(86) International application number:
**PCT/IN2012/000830**

(87) International publication number:
**WO 2014/037958 (13.03.2014 Gazette 2014/11)**

(54) **METHOD FOR CONTROLLING THE ENVIRONMENT IN A GREENHOUSE**

VERFAHREN ZUR UMGEBUNGSKONTROLLE IN EIN GEWÄCHSHAUS

MÉTHODE DE CONTRÔLE DE L'ENVIRONNEMENT DANS UNE SERRE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **06.09.2012 IN 2779DE2012**

(43) Date of publication of application:
**15.07.2015 Bulletin 2015/29**

(73) Proprietor: **Gupta, Sat Parkash
Chandigarh 160002 (IN)**

(72) Inventor: **Gupta, Sat Parkash
Chandigarh 160002 (IN)**

(74) Representative: **Sach, Greg Robert
Sach & Associates
Siedlungsstrasse 4a
85253 Erdweg (DE)**

(56) References cited:
**AU-A1- 2006 202 086     DE-A1- 2 515 363
US-A- 5 713 154         US-A1- 2008 087 165
US-A1- 2011 041 395**

**Description**

**TECHNICAL FIELD OF THE INVENTION**

The present invention in particular relates to the Improvement in and relating to environment controlled greenhouses using compressor and in general to the numerous applications and needs structures and installations.

**BACKGROUND OF THE INVENTION**

Even the latest prior art greenhouses are suffering numerous problems of which so far no cost effective tangible solutions exist and as such cost effective food production cannot be realized in prior art greenhouses.

Few basic problems of prior art greenhouse are mentioned herein below:

It is almost impossible to maintain in greenhouse air relative humidity defined precise set points. Water molecules evaporate into air till equilibrium, if temperature increases at a certain air relative humidity air expands and can hold more water and relative humidity reduces. Also, at a certain air relative humidity if temperature decreases, greenhouse air contracts and can hold less water. As long as water doesn't condense out of air greenhouse air relative humidity increases with any further temperature decrease, concentration of water in air rises above saturation point and condenses (dew point) forming large drops of water on greenhouse cover films' and gutters' interior surfaces which drip on to plants'.

Several foliar diseases are directly related to high relative humidity especially botrytis and powdery mildew. Powdery mildew spores germinate best at 95% relative humidity or higher condensation also reduces light transmission.

Another problem is mist, a very fine continuous layer of moisture on greenhouse cover film and gutters' interior surfaces during cold early morning hours when temperature decreases and relative humidity saturates or dense fog in greenhouse which also reduces light transmission into greenhouse.

Also, there is utmost difficulty in maintaining greenhouse air temperature defined precise set point in hot locations wherein there is no option of using fan /pad or foggers evaporative cooling which increases relative humidity. The greenhouse air temperature defined precise set point can't be controlled and maintained because more the greenhouse air relative humidity, less effective is the evaporative cooling. Furthermore, supplementary cooling cost in hot locations is very high.

Very heavy cost of greenhouse supplementary heating mostly by burning fossil fuel which also emits very substantial air pollutants, most of which also aggravate global warming

During dark hours, plants exhale carbon dioxide and are in dire need of oxygen rich environment to Respirate and rejuvenate Plants' health vigor and strong immune system maximizing plants' tolerance to disease etc.

Due to dark hours plants' exhaled carbon dioxide and or due to residual carbon dioxide after sunlight hours fertilization events and thereafter till solar radiation into greenhouse is more than defined events greenhouse carbon dioxide ppm much higher than atmosphere carbon dioxide ppm, greenhouse carbon dioxide is released into atmosphere aggravating global warming and heavy cost of carbon credits.

Another problem is that in greenhouse air relative humidity air temperature and carbon dioxide ppm vary due to horizontal and vertical gradients (non-uniformity) and hot or cold pockets which are further augmented by plants' own moisture production (transpiration) driven by leaf temperature and VPD.

In prior art greenhouse during winter, horizontal air fans are provisioned to run continuously to improve greenhouse relative humidity and temperature uniformity and to abhort hot or cold pockets, but cost benefit ratio is minimal.

Also, intensity of solar radiation worldover at ground level is unevenly distributed because of variables such as solar altitude, which is associated with latitude, season, atmosphere conditions (cloud coverage), degree of pollution and elevation above sea level.

Climatic conditions are characterized by low and high atmosphere temperature during winter and summer, the absolute minimum during winter is ~ -40°C (-40°F) and the absolute maximum during summer is ~ 46°C (1 15°F). In prior art greenhouse thermal screen is installed at gutters' interior level to retain heat at night to reduce heat loss from greenhouse and thermal energy cost. But the problem is to maintain greenhouse thermal screen air tight to reduce heat loss from below thermal screen to above thermal screen. Furthermore, during snow storms, thermal screen is triggered-off to allow below thermal screen heat to reach ceiling to melt snow. The sudden exposure of plants enjoying cozy environment to colder environment is detrimental to plants' health. Furthermore this method of melting snow is not adequate.

In prior art greenhouse, double layer inflated polyethylene is used to reduce heating cost. However, there is utmost difficulty to maintain optimal insulation between two layers of inflated polyethylene which is critical for increased heating efficiency to minimize heat loss and thermal energy cost in cold locations. Another problem is isolating leaking holes.

Furthermore, in hot locations separate shading curtains are used during hot summer sunlight hours to reduce needless heat gain to reduce supplementary cooling cost.

So for no cost effective tangible solution exists to control daily light photoperiod, which is vital factor Influencing plants' growth. Plants grown in conditions of varying daily light photoperiod pattern can't settle in regular life cycle and grow poorly.

Another problem is gutter-connected multibay greenhouses. It is absolutely unviable to install gutters of adequate volume to handle very heavy down pour of water in multibay greenhouses.

As such heavy down pour of water overflows on multibay greenhouses roofs and along sides' and enters into greenhouse, damaging crop and gutters related other problems viz. blocking incoming sunlight energy into greenhouse, condensation or mist on gutters' interior surfaces and snow accumulation in gutters.

Another problem is snow accumulation on greenhouse roof cover film exterior surfaces.

Yet another problem is dust / dirt accumulation on greenhouse cover film exterior surfaces. Dust / dirt etc. causes substantial reduction in transmitted solar radiation into greenhouse. Within few weeks after installation dust / dirt can render greenhouse cover film almost opaque rather than transparent and hence reduces light transmission very substantially. Dust / dirt accumulation on greenhouse cover film and in gutters also promotes growth of fungi and algae wherein dust / dirt are serving as soil and mineral elements.

Another problem is fire hazards, because of highly inflammable greenhouse cover polyethylene film, insect nettings and screens etc.

Yet another grave problem is food production in greenhouse in freezing cold locations, wherein, life exists but sunlight energy is very deficient.

Another problem is very heavy capital cost and labour intensive complicated equipments for:

(i) Warm water drip irrigation
(ii) Fertilizers, nutrients, pH adjustment chemicals. crop protection treatment drip dozing
(iii) Fertilizers, nutrients crop treatment foliar dozing
(iv) Greenhouse evaporative cooling
(v) Greenhouse, humidification in hot locations.
(vi) Dust dirt wash off from cover film exterior surfaces
(vii) Fire fighting
(viii) Greenhouse pressurized water manifold for hand mist gun.

Also, as of now for roll on/off curtains' and screens, very high cost large wall thickness C-class large diameter galvanized iron pipes are used to keep them weighted down to retain them tightly in place and prevent them from blowing out by wind. However, these means are very expensive.

Basic needs to overcome the problems of prior art greenhouse are:

1. Substantial reduction in operating cost.

2. Maintaining greenhouse relative humidity and temperature defined precise set points.

3. Abhorting dark hours carbon dioxide release into Atmosphere which aggravate global warming and heavy cost of carbon credits.
Devices and methods exist in the prior art to limit release of carbon dioxide into the atmosphere, see for example the disclosures of US 2011/0041395, US 5713154 or US 2008/0087165.

4. Provisioning plants oxygen rich environment during dark hours to respirate and rejuvenate Plants' health vigor and strong immune system maximizing plants' tolerance to disease etc.

5. Reducing use and cost of fertilizers, nutrients, chemicals, crop protection agents etc.

6. Minimizing greenhouse supplementary heating and supplementary cooling cost in respective cold and hot locations.

7. Sourcing some cost effective material to serve thermal screen cum shading material for "AN ALL IN ONE SOLUTION IN SEASONAL OR MOST SEASONS MOSTLY HOT AND MOSTLY COLD OR FREEZING COLD LOCATIONS."

8. Increasing sunlight energy into greenhouses.

9. Stopping heavy down pour of water overflowing on multibay greenhouses' roofs and along sides, entering into greenhouse and damaging crop.

10. Reducing dust / dirt accumulation on greenhouse cover film exterior surfaces which will lead to increase in light transmission.

11. Efficient method to combat fire hazards which may occur due to highly inflammable greenhouse cover polyethylene film, insect netting, screens etc.

12. Facilitating melting snow accumulation on greenhouse roof cover film and in gutters.

13. Provisioning growing media crop root zone aeration, maintaining crop root zone temperature defined set point and drained off leachate automated collection.

14. Provisioning cost effective integrated pest management and obviating toxic crop protection agents use.

15. Obviating ventilation need during rain and snow when prior art greenhouse is closed.

16. Facilitating Food production in greenhouse in cold or freezing cold locations wherein, life exists but sunlight energy is very deficient and wherein so for food production has not been realized.

17. Reducing cost of galvanized iron pipes for roll on/off curtains' and screens for weighting down to retain them tightly in place and to prevent them from blowing out by wind.

## OBJECTS OF THE INVENTION

## Background

EARTH TUBE HEAT EXCHANGER **FUNDA**
SOIL STATA BETWEEN 2 - 3 MTR DEPTH
TEMP REGIME IS CONSTANT (THERMAL CONSTANT)
TEMP IN THIS STATA DISPLAYS NO DIURNAL FLUCTUATION
IT DOES DISPLAY ANNUAL FLUCTUATION BUT AMPLITUDE IS SMALL
AT AHEMDABAD (INDIA) 23. 03 N Lat
AVERAGE THERMAL CONSTANT 27° C

Deeper the STATA, higher the average thermal constant temperature. As such in seasonal or most seasons mostly cold or freezing cold locations, STATA depth can be measured wherein the defined average thermal constant temperature ~20°C (68°F) or higher can be realized.

Since last few decades basic problem has been and which is still persisting is very high and ever rising prices of crude dictated by crude producers which is solely responsible for worldover inflation and economic instability, very substantial portion of global total area (excluding oceans etc.) comprises of seasonal or most seasons mostly cold or freezing cold locations wherein for heating of the premises very substantial crude (fossil fuel) is burnt which also emits very substantial atmosphere pollutants most of which also aggravate global warming. If heating of the premises can be provisioned by some other cost effective means, crude (fossil fuel) demand would be drastically reduced and in place of the crude producers it would be the purchaser dictating crude prices and crude producers would be forced to offer much lower realistic prices.

For heating of premises the best means is earth tube heat exchanger which offers very cost effective heating of premises in cold or freezing cold locations saving substantial fossil fuels.

Another cost effective means is geo-thermal energy which involves low investment cost over other renewable energy sources and emits only a small percentage of atmosphere air pollutants than emitted by burning fossil fuels, no fuel expense and it does not depend upon energy markets. By provisioning geothermal energy generating neat and clean automated equipments.

1st Objective

To drastically reduce crude demand by provisioning heating of the premises by earth tube heat exchanger which maintains premises temperature equal to average thermal constant temperature of the location at ~20°C (68°F) or higher with or without geo-thermal energy generating module.

## Background

Due to dark hours plants' exhaled carbon dioxide or due to residual carbon dioxide after sunlight hours carbon dioxide (1000-1500 ppm) fertilization events and thereafter till solar radiation into greenhouse is more than defined greenhouse carbon dioxide ppm much higher than atmosphere carbon dioxide ppm, greenhouse carbon dioxide is traditionally released into atmosphere aggravating global warming.

Similarly industrial co-produced carbon dioxide escapes into atmosphere.

### 2nd Objective

To offer tangible method to ameliorate global warming by Abhorting Greenhouse carbon dioxide traditional release into atmosphere and instead capturing, compressing, storing and utilizing this carbon dioxide for sunlight hours fertilization to optimize yield for very low cost food production And also abhorting industrial co-produced carbon dioxide traditional escape into atmosphere and instead capturing with Compressors' manifolds' inlets positioned around carbon dioxide co-producing sources.

Compressors' delivery in very deep water bore which after installation of compressors' delivery pipes is tightly filled with soil maintaining dissolved carbon dioxide which in due course would convert into hydro carbons.

## Background

Land on earth planet is limited, population is growing very fast. In a world with a burgeoning population, fight against hunger cannot be over emphasized.

Apart from food security another much more grave problem is cost of food production which is rising very fast due to very high and ever rising input costs So that in coming decades even if food is available, most of the world population in general and population in undeveloped and developing countries in particular would not be able to afford cost of food and would have to starve and die of hunger.

As such it is essential to harness tangible means for cost effective food production.

As of now best means is using activated solutions of fertilizer and nutrients reducing their input cost by ~50% in drip dozing and by ~75% in foliar dozing, spraying activated solutions of fertilizers and nutrients is the best method which enhances their use efficiency and eliminates their leaching cost and water table pollution only Diammonium Phosphate activated solution basal dozing to be dozed together with seed drilling or transplanting and obviating toxic crop protection agents' use saving their and spraying labours' substantial cost, labours' health hazards and non-toxic food production.

It is also essential to harness means to facilitate food production in most seasons mostly cold or freezing cold locations wherein life exits but sunlight energy is very deficient.

### 3rd Objective

To offer cost effective tangible methods for cost effective food production by using activated solutions of fertilizers and nutrients and obviating toxic crop protection agents' use, saving their and spraying labours' substantial cost, labours' health hazards and non-toxic food production and to facilitate food production in cold or freezing cold locations by increasing deficient sunlight energy together with artificial lighting energy, using earth tube heat exchanger together with Geo-thermal energy generating module.

### 4th Objective

To offer environment friendly extremely efficient greenhouse for very low cost food production

### 5th Objective

To offer cost effective tangible methods of the numerous problems which prior art greenhouses are suffering so that cost effective food production can also be realized in existing greenhouse.

## SUMMARY

The present invention is related to a method for controlling the environment in a multi bay structured greenhouse, as disclosed in claim 1.

The following aspects describe equipments of a greenhouse, not part of the present invention.

The first aspect is summarized as a greenhouse equipped with a solar radiation sensor, a temperature sensor, a relative humidity sensor and a carbon dioxide sensor.

The second aspect is summarized as a greenhouse equipped with a basic module Z1 which comprises of a compressor, a tank T1, a tank T2, a tank Ta, a capture manifold and a release manifold, wherein the capture manifold captures dark hours carbon dioxide rich greenhouse air or sunlight hours oxygen rich greenhouse air which is compressed and stored in operating T1 or T2. Ta stores atmosphere compressed air.

The third aspect is summarized as a cost effective method to measure average thermal constant temperature of a location by stepwise placement of thermistor probes in bores of various depths below ground level to realize most suitable average thermal constant temperature.

The fourth aspect is summarized as a greenhouse equipped with a cost effective material earth tube heat exchanger to condition greenhouse relatively cooler air to relatively warmer in cold locations and to condition relatively warmer greenhouse air to relatively cooler in hot locations.

The fifth aspect is summarized as a greenhouse equipped with a module Z3 comprising of greenhouse air relative humidity sensor together with relevant provisions of Z1 and Z2 to maintain greenhouse relative humidity at defined precise set point.

The sixth aspect is summarized as a greenhouse provisioned with a geo-thermal module Z4 comprising of geo-thermal neat and clean automated module to generate thermal energy for greenhouse supplementary heating and for numerous other needs.

The seventh aspect is summarized as a system to abhort dark hour's plants exhaled carbon dioxide and residual carbon dioxide after sunlight hours carbon dioxide (1000-1500 ppm) fertilization events, traditional release into atmosphere and instead capturing compressing storing and utilizing this carbon dioxide during sunlight hours fertilization to optimize yield and to ameliorate global warming.

The eighth aspect is summarized as a cost effective tangible method to reduce input cost of fertilizers by using their activated solutions and obviating toxic crop protection agents' use, saving their and spraying labours' substantial cost, labours' health hazards and non-toxic food production.

The ninth aspect is summarized as a tangible method to maintain greenhouse cover film exterior surfaces free of dust / dirt by provisioning two roof sprinkler manifolds, two gable sides' sprinkler manifolds and two long sides' sprinkler manifolds.

The tenth aspect is summarized as efficient fire fighting system to combat fire hazards which may occur due to highly inflammable greenhouse cover film, insect netting and screens etc.

The eleventh aspect is summarized as a system using growing media beds provisioned to abhort crop root zone contact with soil wherein harmful pests exist which may harm crops. By using growing media beds, yield is almost double and all benefits of bags can be realized much better at much lower cost. Furthermore growing media beds' serves other needs as well viz. crop root zone aeration, maintaining crop root zone temperature set point and drained off leachate automated collection which bags don't offer and also saving substantial cost of growing media bags.

The twelfth aspect is summarized as a system provisioning greenhouse roof covers films' and gutters' interior surfaces heating manifold to melt snow which slides off.

The thirteenth aspect is summarized as a cost effective tangible method to reduce greenhouse supplementary heating cost in cold locations and greenhouse supplementary cooling cost in hot locations by using a thermal screen cum shading material roof external curtains and four sides internal curtains which are 0-100% convertible and which also serve as most efficient photoperiod control.

The fourteenth aspect is summarized as a cost effective tangible method in locations of artificial lighting energy being capital and operating cost intensive, module Z7 equipped with cost effective tangible means and/or by tangible methods by installing deficient of artificial lighting energy which after increase would be optimum into greenhouse saving substantial capital and operating cost of artificial lighting energy.

Z7 is provisioned with cost effective tangible means and/or by tangible methods for increasing deficient sunlight energy into greenhouse to be optimum for food production in locations wherein sunlight energy is not deficient but is reduced due to dust / dirt accumulation on greenhouse cover film exterior surfaces and/or due to condensation or mist formation on greenhouse cover films' interior surfaces.

The fifteenth aspect is summarized as a method for cost effective food production in very cold or freezing cold locations wherein life exists but sunlight energy is very deficient, the cost effective food production is realized by increasing deficient sunlight energy together with artificial lighting energy by provisioning greenhouse with mirrors, aluminium foils etc using earth tube heat exchanger together with geo-thermal energy generating automated equipment.

The sixteenth aspect is summarized as a system provisioning integrated pest management by maintaining green house relative humidity at ~80% which abhorts pressure of disease, bacteria, pathogens, fungus, virus etc.

The seventeenth aspect is summarized as a greenhouse wherein gutters together with all gutters' related problems are eliminated

The eighteenth aspect is summarized as a tangible method to maintain optimal insulation between two layers of inflated double layer polythene greenhouse cover film and isolating leaking holes.

The nineteenth aspect is summarized as a system in which smaller wall thickness and smaller diameter, cheaper galvanized iron pipes filled with sand (ends sealed to ensure no escape of sand) are used in place of costly large wall thickness C-class and large diameter galvanized iron pipes which serves same need and saving their considerable cost.

**DETAILED DESCRIPTION**

According to the first embodiment, a greenhouse is provisioned with a plurality of sensors viz. a solar radiation sensor, a temperature sensor, a relative humidity sensor and a carbon dioxide sensor.

Atmosphere weather station provisioned with an atmosphere solar radiation sensor, an atmosphere air relative humidity sensor, an atmosphere air temperature sensor, a wind speed sensor and a rain detector.

When wind speed exceeds normal weather station wind, speed sensor triggers-off roof automated roll on/off thermal screen cum shading material external curtains. And when high speed wind is not materializing or is over after defined delay, roof automated roll on/off thermal screen cum shading material external curtains return to the previous position (home).

And when weather station rain detector detects rain, atmosphere rain detector trigger-off roof automated roll on/off thermal screen cum shading material external curtains and when rain is not materializing or is over, roof automated roll on/off thermal screen cum shading material external curtains return to the previous position (home).

And when atmosphere temperature is approaching 0°C, weather station temperature sensor triggers-off roof automated roll on/off thermal screen cum shading material external curtains and when snow is not materializing or is over after defined delay till no snow remains on greenhouse roof (home).

And at sunset or after defined Photoperiod hours, atmosphere solar radiation sensor triggers-on roof automated roll on/off thermal screen cum shading material external curtains and four sides' internal curtains.

According to the second embodiment, the greenhouse provisions a basic module Z1 which comprises of a compressor, a tank T1 a tank T2, a tank Ta, a capture manifold and a release manifold, wherein the compressor compresses carbon dioxide rich greenhouse air of dark hours and oxygen rich greenhouse air of sunlight hours which is captured by capture manifold. The dark hours carbon dioxide rich greenhouse air or sunlight hours oxygen rich greenhouse air is compressed and stored in operating T1 or T2 which also serves to dehumidify stored compressed greenhouse air.

The greenhouse relative humidity sensor triggers-on operating T1 or T2 moisture drain off valve to drain off moisture content for optimal dehumidification maintaining greenhouse air relative humidity at -set point in operating T1 or T2 or drains off total moisture content to maintain almost dry air in operating T1 or T2.

Release manifold simultaneously releases into greenhouse, carbon dioxide rich dehumidified conditioned greenhouse air already stored in Ec during sunlight hours and oxygen rich dehumidified conditioned greenhouse air already stored in Eo during dark hours.

The events of capture manifold and release manifold are provisioned concurrent.

The tank Ta stores atmosphere compressed air and also serves to dehumidify stored atmosphere compressed air, greenhouse relative humidity sensor maintains greenhouse air relative humidity at ~set point in Ta which is used for release into greenhouse for maintaining carbon dioxide and oxygen balance and also for auxiliary equipments operations When capture manifold is not operating, compressor is provisioned to compress atmosphere air to maintain optimal atmosphere compressed air stock in Ta.

During morning defined sunlight hours, atmosphere solar radiation sensor trigger-on compressor capture manifold and release manifold events. Capture manifold to capture oxygen rich greenhouse air which is compressed and stored in operating T1 or T2; and release manifold to simultaneously release into greenhouse dehumidified conditioned carbon dioxide rich greenhouse air already stored in 1st compartment Ec thus utilizing during sunlight hours (dark hours plants exhales carbon dioxide or residual carbon dioxide after carbon dioxide fertilization events) to optimize yield for very cost effective food production and to substantially ameliorate global warming.

According to the third embodiment a cost effective method to measure average thermal constant temperature of a location by placement of thermistor probes in bores made by rotary borer of diameter ~ 2 centimeter more than thermistors' probe dimensions and a steel rod, bottom end of which is welded with ~ 5 centimeters thick steel plate of diameter 2 centimeter less than the bore diameter pushes the thermistors' probe to place it at bottom end of the bore of 2.5 meter depths below ground level. After placement of thermistors' probe, bore is tightly filled with soil to maintain optimal insulation between thermistors' probe and the atmosphere.

Thermistors probe output temperature is recorded continuously till temperature stabilizes and remains constant for few days. This constant temperature is average thermal constant temperature of the location, similar treatments of other bores ~ 20 square meters apart with stepwise depth increments of 0.5 meter or more or less in each subsequent bores based upon average thermal constant temperature at 2.5 meter depth and thermistors probe placement till most suitable average thermal constant temperature is realized (~20°C (68°F) or higher).

According to the fourth embodiment a module Z2 comprising of a cost effective material earth tube heat exchanger is provisioned together with relevant provisions of Z1 to condition relatively cooler greenhouse air to relatively warmer in cold locations and to condition relatively warmer greenhouse air to relatively cooler in hot locations.

The cost effective earth tube heat exchanger comprises of four separate compartments. 1st compartment Ec stores operating T1 or T2 (carbon dioxide rich dehumidified) greenhouse air, 2nd compartment Eo stores operating T1 or T2 (oxygen rich dehumidified) greenhouse air, 3rd compartment Ecd stores operating T1 or T2 (carbon dioxide rich almost dry) greenhouse air and 4th compartment Eod stores operating T1 or T2 (oxygen rich almost dry) greenhouse air.

When greenhouse air temperature is more than or less than average thermal constant temperature (defined), greenhouse temperature sensor trigger-on earth tube heat exchanger, compressor, capture manifold and release manifold events.

When greenhouse air temperature equals earth tube heat exchanger average thermal constant temperature (defined), greenhouse air temperature sensor triggers-off earth tube heat exchanger, compressor, capture manifold and release manifold events.

In Cold Locations

Greenhouse temperature sensor triggers-on compressor, capture manifold and release manifold events capture manifold to capture dark hours carbon dioxide rich or sunlight hours oxygen rich greenhouse air which is compressed and stored in operating T1 or T2, greenhouse relative humidity sensor maintains greenhouse air relative humidity at ~set point in operating T1 or T2, operating T1 or T2 (carbon dioxide rich dehumidified) greenhouse air is stored in 1st compartment Ec and operating T1 or T2 (oxygen rich dehumidified) greenhouse air is stored in 2nd compartment Eo.

Release manifold to simultaneously release into greenhouse hot air and when greenhouse air temperature equals greenhouse air temperature defined precise set point then greenhouse air temperature sensor trigger-off release manifold hot air release, compressor, and capture manifold events.

------------

Hunting Rising Trend (-) 2.5%, Lowering Trend (+) 2.5%

------------

In Hot Locations

Greenhouse temperature sensor triggers-on evaporative cooling with concurrent compressor, capture manifold and release manifold events, capture manifold to capture dark hours carbon dioxide rich or sunlight hours oxygen rich greenhouse air which is compressed and stored in operating T1 or T2. Greenhouse air relative humidity sensor maintains almost dry greenhouse air in operating T1 or T2, operating T1 or T2 (carbon dioxide rich almost dry) greenhouse air is stored in 3rd compartment Ecd and operating T1 or T2 (oxygen rich almost dry) greenhouse air is stored in 4th compartment Eod.

Release manifold to simultaneously release into greenhouse 3rd compartment Ecd already stored almost dry conditioned carbon dioxide rich greenhouse air during sunlight hours and 4th compartment Eod already stored almost dry conditioned oxygen rich greenhouse air during dark hours for optimal evaporative cooling to maintain greenhouse air temperature at defined precise set point.

When greenhouse air temperature equals greenhouse air temperature defined precise set point, greenhouse air temperature sensor trigger-off evaporative cooling, compressor, capture manifold and release manifold events.

------------

Hunting Rising Trend (-) 2.5%, Lowering Trend (+) 2.5%

------------

As such, it is very easy to adjust greenhouse temperature at defined precise set point which helps in improving timing of crops significantly especially of flowers.

Z2 substantially reduces greenhouse supplementary heating cost in cold locations and greenhouse supplementary cooling cost in hot locations by maintaining greenhouse air temperature equal to earth tube heat exchanger average thermal constant temperature.

In the environment controlled or non environment controlled structures and installations for numerous applications and needs, cold storages multiplexes, hotels, malls, commercial and residential complexes, museums', zoological parks', stud forms, cows and buffalos sheds etc (premises'), wherein Z2 offers very cost effective conditioning of premises' with relatively cooler air to relatively warmer in cold locations and conditioning premises with relatively warmer air to relatively cooler in hot locations. Marinating (Premises') temperature equals to average thermal constant temperature of the location.

Furthermore Z2 is most cost effective and most potent tool to condition colder air to warmer in seasonal or all seasons' mostly cold or freezing cold locations saving very substantial cost of conventional thermal energy.

According to the fifth embodiment the module Z3 is provisioned with greenhouse air relative humidity sensor together with relevant provisions of Z1 and Z2. Z3 events are greenhouse air relative humidity driven to maintain greenhouse air relative humidity at defined precise set point. When, greenhouse air relative humidity is more than greenhouse relative humidity defined precise set point, then greenhouse relative humidity sensor triggers-on compressor, capture manifold and release manifold events. Capture manifold to capture dark hours carbon dioxide rich or sunlight hours oxygen rich humid greenhouse air which is compressed and stored in operating T1 or T2. Greenhouse air relative humidity sensor maintains almost dry air in operating T1 or T2, operating T1 or T2 (carbon dioxide rich almost dry) greenhouse air is stored in 3rd compartment Ecd and operating T1 or T2 (oxygen rich almost dry) greenhouse air is stored in 4th compartment Eod.

Release manifold to simultaneously release into greenhouse 3rd compartment Ecd, already stored almost dry conditioned carbon dioxide rich greenhouse air during sunlight hours and 4th compartment Eod, already stored almost dry conditioned oxygen rich greenhouse air during dark hours to maintain greenhouse relative humidity at defined precise set point (~80% or lower or higher). When greenhouse relative humidity equals greenhouse air relative humidity defined precise set point, then greenhouse air relative humidity sensor triggers-off compressor, capture manifold and release manifold events.

------------

### Hunting Rising Trend (-) 2.5%, Lowering Trend (+) 2.5%

-----------

Hunting Rising Trend (-) 2.5%, Lowering Trend (+) 2.5%

In hot locations when greenhouse air relative humidity is less than greenhouse air relative humidity defined precise set point, then greenhouse relative humidity sensor triggers-on evaporative cooling and when greenhouse air relative humidity equals greenhouse air relative humidity defined precise set point, then greenhouse air relative humidity sensor triggers-off evaporative cooling. Z3 offers much higher crop density, yield, quality, crop uniformity and earlier harvest.

------------

### Hunting Rising Trend (-) 2.5%, Lowering Trend (+) 2.5%

-----------

Hunting Rising Trend (-) 2.5%, Lowering Trend (+) 2.5%

During sunlight hours

Release manifold releases into greenhouse

(a) Earth tube heat exchanger 1st compartment Ec already stored (carbon dioxide rich dehumidified) conditioned greenhouse air.

(b) Earth tube heat exchanger 3rd compartment Ecd already stored almost dry conditioned carbon dioxide rich greenhouse air to maintain in greenhouse air relative humidity defined precise set point or for optimal evaporative cooling to maintain greenhouse air temperature defined precise set point in hot locations

(c) Ta stored atmosphere compressed air to maintain carbon dioxide and oxygen balance in greenhouse.

(d) Hot air in cold locations.

(e) Additional carbon dioxide for fertilizing for optimal photosynthesis to optimize yield.

During dark hours

Release manifold releases into greenhouse

(a) Earth tube heat exchanger 2nd compartment Eo already stored (oxygen rich dehumidified) conditioned greenhouse air.
(b) Earth tube heat exchanger 4th compartment Eod, already stored almost dry conditioned oxygen rich greenhouse air to maintain in greenhouse air relative humidity defined precise set point or for optimal evaporative cooling to maintain greenhouse air temperature defined precise set point in hot locations.
(c) Ta stored atmosphere compressed air to maintain carbon dioxide and oxygen balance in greenhouse.
(d) Hot air in cold locations.

Release manifold released air

(a) Pushes up greenhouse stale air from cultivation level to above plants.

(b) Creates multiple combinations of horizontal and vertical flows and circulation cycles around plants for uniform mixing of release manifold released air with greenhouse existing air.

(c) Controls and maintains in greenhouse in all vertical and horizontal locations;

(i) Relative humidity defined precise uniform set point.
(ii) Temperature defined precise uniform set point.
(iii) Carbon dioxide ppm defined precise uniform set point.

(d) Optimal air circulation minimizing fungus problems. No hot or cold pockets. No need of horizontal air fans, saving their considerable capital and operating cost.

(e) Also pollinates plants for optimal pollination during pollination hours, release pressure is increased.

According to the sixth embodiment a geo-thermal neat and clean automated module Z4 is provisioned together with relevant provisions of Z1 and Z6. Z4 comprises of two identical geo-thermal energy generating tanks 1st fresh dozing tank and 2nd spent dozing tank, a hot air tank and a carbon dioxide tank.
The primary function of Z4 is to generate geo-thermal energy for

(i) Greenhouse supplementary heating
(ii) Irrigation water warming,
(iii) Drip dozing solution warming
(iv) Foliar dozing solutions warming
(v) Growing media beds crop root zone warming
(vi) Greenhouse roof cover film and gutter interior surfaces heating
Snow melts and slides off.

The secondary function of Z4 is to offer almost free of cost carbon dioxide for fertilization for optimal photosynthesis and also almost free of cost high quality sterilized growing media cum compost.
A module Z4 needs ~ 7 square meter space at greenhouse floor area in cold or freezing cold locations. Both geo-thermal fresh dozing tank and spent dozing tank are positioned at greenhouse floor area till spent dozing tank cooling mode temperature equals greenhouse air temperature. When spent dozing tank outer surfaces temperature equals greenhouse air temperature spent dozing tank thermistor trigger-on alarms defined duration and intervals.
Added benefit is that hot surfaces of fresh dozing, spent dozing tank, hot air tank and carbon dioxide tank radiate heat to maintain greenhouse warm.
More than one individual Z4 is positioned scattered on greenhouse floor area ensuring uniform greenhouse air temperature.
Therefore in the environment controlled or non environment controlled structures and installations for numerous applications and needs, cold storages multiplexes, hotels, malls, commercial and residential complexes, museums', zoological parks', stud forms, cows and buffalos sheds etc (premises') Z4 offers very cost effective heating of premises in cold or freezing cold locations saving very substantial conventional thermal energy and its cost.

According to the seventh embodiment a module Z5 provisioned with greenhouse carbon dioxide sensor together with relevant provisions of Z1 and Z2 to abhort greenhouse carbon dioxide traditional release into atmosphere.

Z5 events are driven by greenhouse carbon, dioxide ppm when greenhouse carbon dioxide ppm are more than atmosphere carbon dioxide ppm (~350 ppm) (except during sunlight hours carbon dioxide fertilization events and thereafter till solar radiation into greenhouse is more than defined) due to dark hours plants exhaled carbon dioxide or due to residual carbon dioxide after sunlight hours carbon dioxide (1000-1500 ppm) fertilization events. Greenhouse carbon dioxide sensor triggers-on compressor, capture manifold and release manifold events Capture manifold to capture carbon dioxide rich greenhouse air which is compressed and stored in operating T1 or T2.

Greenhouse relative humidity sensor maintains greenhouse air relative humidity at -set point in operating T1 or T2, operating T1 or T2 carbon dioxide rich dehumidified greenhouse air is stored in 1st compartment Ec.

Release manifold to simultaneously release into greenhouse 2nd compartment Eo, already stored (oxygen rich dehumidified) conditioned greenhouse air when greenhouse carbon dioxide ppm equals atmosphere carbon dioxide ppm, greenhouse carbon dioxide sensor triggers-off compressor, capture manifold and release manifold events.

During dark hours, greenhouse carbon dioxide sensor trigger-on compressor, capture manifold and release manifold events release manifold to release into greenhouse, oxygen rich dehumidified conditioned greenhouse air already stored in 2nd compartment Eo, to serve plants' dire need for oxygen rich environment during dark hours to respirate and rejuvenate plants health vigor and strong immune system maximizing plants' tolerance to disease, organisms, bacteria, pathogens, fungi, viral infection, harmful insect, pests and capture manifold to simultaneously to capture dark hours carbon dioxide rich greenhouse air which is compressed and stored in operating T1 or T2 greenhouse air relative humidity sensor maintains greenhouse air relative humidity at ~ set point in operating T1 or T2. Operating T1 or T2 dehumidified carbon dioxide rich greenhouse air is stored in 1st compartment Ec.

As such in the environment controlled multibay structured greenhouse instead of high cost carbon credits purchase, substantial revenue is generated by selling carbon credits, furthermore present innovative greenhouse being just like air conditioned premises leading to much higher energy efficiency, reduced operating cost and wherein there are no horizontal or vertical gradients (non uniformity), no hot or cold pockets, crops in greenhouse at all locations enjoy uniform relative humidity, temperature and carbon dioxide ppm defined precise set points, and there is no need of horizontal air fans saving their substantial capital and operating cost and wherein all benefits of very tall greenhouse can be realized in much less tall greenhouse saving substantial greenhouse capital and operating cost.

According to the eighth embodiment the module Z6 comprising of activated fertilizer, nutrient and crop treatment dosing system and a drip dozing irrigation system in which there are four operating HDPE tanks viz. a WT, a IRWT, a TNDT, and a TNFT, a reserve water tank WTR, a high pressure pump HP, a water transfer pump PT, a sediment transfer pump PS, a drip manifold DM and-a foggers manifold FM two sediment collection tanks and a leachate collection tank. Using activated fertilizers and nutrients', solutions, reduces their use and cost by ~50% in drip dozing and by ~75% in foliar dozing.

Tank WT stores water for supply to high pressure pump, HP and via water transfer pump PT to tanks IRWT, TNDT, TNFT, etc. WT inlet is connected to water supply line. Tank WTR stores reserve water for, supply to WT during water supply line failure. WTR inlet connected to water supply line. Tank IRWT stores water for irrigation and for defined duration irrigation before and after each fertilizing drip dozing event.

In Tank TNDT, fertilizer, nutrients, pH adjustment, crop root zone treatment, solution mixing, activating and drip dozing is done. After TNDT manual fresh dozing event (weight or volume) push button signal. All subsequent operations are provisioned fully automated till TNDT sediment drain out into sediment collection tank event is over.

In tank TNFT, crop treatment, fertilizers and nutrients foliar dozing, solution mixing activating and foliar dozing is done. After TNFT manual fresh dozing event (weight or volume), push button signal. All subsequent operations are provisioned fully automated till TNFT sediment drains out into sediment collection tank event is over.

Tank DFFNSCT stores fertilizer, nutrients drip and foliar dozing solution sediment and Tank FTDTSCT stores crop treatment foliar and drip dozing solution sediment.

According to the ninth embodiment module Z6, comprising of two roof sprinkler manifolds, two gable sides' sprinkler manifolds and two long sides' sprinkler manifolds are provisioned to maintain greenhouse cover film exterior surfaces free of dust / dirt. Roofs', gable sides' and long sides' sprinkler manifolds inlets connected to high pressure pump outlet.

During defined sunlight hours duration and interval (based upon location dust / dirt status)

Atmosphere solar radiation sensor trigger-off roof automated roll on/off thermal screen cum shading material external curtains and when said curtains are actually fully off, atmosphere solar radiation sensor trigger-on roof gable sides and long sides sprinkler manifolds to throw pressurized water onto greenhouse roofs', both gable sides' and both long sides' cover film exterior surfaces to wash off all dust / dirt.

According to the tenth embodiment greenhouse is provisioned with smoke detectors for efficient fire fighting to combat fire hazards, because of highly inflammable greenhouse cover polyethylene film, insect netting and screens etc.

Smoke detection trigger-off all ongoing events and triggers-on all six sprinkler manifolds to throw pressurized water onto greenhouse roof, both gable sides' and both long sides' to extinguish fire at the earliest. The main benefit is minimal damage of greenhouse cover film and crop inside greenhouse.

According to the eleventh embodiment module Z6 is provisioned with a plurality of growing media beds' treatments, wherein thermal screen cum shading material fixed at growing media beds' bottom ends at -60 centimeter depth and -60 centimeter along four interior vertical sides with 15 centimeter overlap on four horizontal exterior sides' surfaces bottom end provisioned with another layer of polythene film and in between the two layers is provisioned pipes for growing media crop root zone aeration, for maintaining crop root zone temperature at defined set point and for drained off leachate collection and thereafter top ends is tightly covered with thermal screen cum shading material with 15 centimeter overlap along four interior vertical sides.

Thereafter growing media beds crop root zone is heated to temperature defined set point. Holes for seeding or transplanting after crop emergence covered all around with thermal screen cum shading material which not only helps in maintaining growing media crop root zone temperature, but it also abhorts germination of weed seeds.

Greenhouse air temperature is mostly cooler than growing media crop root zone temperature.

Thermal screen cum shading material exterior and interior surfaces being solid barriers between soil underneath bottom layer growing media crop root zone and greenhouse air temperature environments, absorbs and retains soil underneath bottom layer or crop root zone and greenhouse air temperature hot or cold air trying to enter into growing media crop root zone and crop root zone hot air trying to escape into greenhouse air.

Growing media beds' treatment manifold

There are four treatments.

*1st Treatment*

Pressurized air injections into growing media beds' treatment manifold 1st inlet for growing media beds' aeration after each irrigation event or after defined duration Irrigation each event.

*2nd Treatment*

Pressurized water injections into growing media beds' treatment manifold 2nd inlet each evening at defined hours and duration.

*3rd treatment*

Pressurized air 2nd injections into growing media beds' treatment manifold 1st inlet defined duration.

*4th treatment*

Pressurized hot air injections into growing media beds' treatment manifold 3rd inlet.

When growing media beds' crop root zone temperature is less than temperature defined set point, then growing media beds' crop root zone thermistors, trigger-on pressurized hot air injections into growing media beds' treatment manifold 3rd inlet. When growing media beds' crop root zone temperature equals crop root zone temperature defined set point crop root zone, thermistors' trigger-off pressurized hot air injections. When growing media beds crop root zone temperature is again less than crop root zone defined set point, then crop root zone thermistors' again trigger-on pressurized hot air injections into Growing media beds' treatment manifold 3rd inlet and so on and off.

Hunting Rising Trend (-) 2.5%, Lowering Trend (+) 2.5%

After respective 1st, 2nd, 3rd, 4th treatment, drained off leachate collecting in leachate collection manifold is transferred into a leachate storing tank LCT.

According to the twelfth embodiment a greenhouse roof covers film and gutters interior surfaces heating manifold is provisioned. When atmosphere air temperature is approaching 0°C, weather station atmosphere temperature sensor triggers-on pressurized hot air injections into heating manifold to heat greenhouse roof cover film and gutters interior surfaces. The snow melts and slides off.

According to the thirteenth embodiment the module Z7 offers a thermal screen cum shading material interior and exteriors surfaces areas of which are solid barriers between greenhouse interior temperature environment and atmosphere temperature environment. It absorbs and retains greenhouse hot or cold air trying to escape into atmosphere and also absorbs and retains atmosphere cold and/or hot air trying to enter into greenhouse.

Heat energy accumulation on roof and four sides thermal screen cum shading material curtains interior surfaces saves substantial heating cost and helps keep greenhouse air from cooling down during winter, cold evenings, nights and mornings, greenhouse remains warm. There is no chance of moisture condensation or mist formation on greenhouse cover film and gutters' interior surfaces.

Thus reducing greenhouse supplementary heating cost in cold locations and greenhouse supplementary cooling cost in hot locations. AN ALL IN ONE SOLUTION IN SEASONAL OR MOSTLY ALL SEASONS MOSTLY HOT AND MOSTLY COLD OR FREEZING COLD LOCATIONS.

Greenhouse roof polyethylene film fixed and roof automated roll on/off thermal screen cum shading material external curtains are provisioned 0-100% convertible and greenhouse four sides polyethylene film fixed and four sides thermal screen cum shading material internal curtains are also provisioned 0-100% convertible.

In cold or freezing cold locations during sunlight hours and also during daylight over cast sky hours, sunset hours as and when solar radiation is less than defined (~12916 lux (1200 foot candles)) greenhouse solar radiation sensor triggers-off greenhouse roof and four sides automated roll on/off thermal screen cum shading curtains to maximize heat gain (sensible and latent).

According to the fourteenth embodiment Artificial lighting energy being capital and operating cost intensive, Z7 equipped with cost effective tangible means and/or methods for increasing deficient artificial lighting which after increase would be optimum reducing very substantially capital and operating cost of artificial lighting energy by installing much less quantum or artificial lighting.

Module Z7 being equipped with cost effective tangible means for increasing very deficient sunlight energy together with artificial lighting in very cold and freezing cold locations wherein life exists but sunlight energy is very deficient, deficient sunlight energy together with artificial lighting energy is increased to be optimum into greenhouse for food production.

Artificial lighting comprising of compact fluorescent lamps at -10 square meter centers hanging from truss bottom -15 centimeter above plants' tops are provisioned to be raised as plants' grow in height and Fluorescent tubes installed staggered at -20 square meter centers around growing media beds' horizontal width centre and are provisioned alternately red, blue and white.

module Z7 being equipped with cost effective tangible means and/or by tangible methods for increasing deficient sunlight energy into greenhouse to be optimum for food production in locations wherein sunlight energy is not deficient but is reduced due to dust / dirt accumulation on greenhouse cover film exterior surfaces and/or due to condensation or mist formation on greenhouse cover films' interior surfaces.

Sunlight energy and heat energy being concurrent in hot locations during sunlight hours, greenhouse solar radiation sensor triggers-on optimal shading by adjusting positions of greenhouse roof and four sides automated roll on/off thermal screen cum shading curtains to admit into greenhouse only defined deficient solar radiation which after increase would be optimum into greenhouse for food production to minimize needless heat gain to minimize supplementary cooling cost.

The sunlight is increased by provisioning greenhouse with mirrors and aluminium foils at 5 square meters centers. Incoming sunlight energy striking any mirror or aluminium foil is reflected to other mirrors and aluminum foils and is increased by repeated light reflecting cycles to be optimum. Mirrors and aluminum foils also spread light more uniformly.

According to the fifteenth embodiment food production is facilitated in cold or freezing cold locations by increasing deficient sunlight energy together with artificial lighting energy, using earth tube heat exchanger together with Geothermal energy generating module.

According to the sixteenth embodiment Z7 offers Preventive treatment of growing media beds before each crop seeding or transplanting by a cost effective non toxic material and/or by a cost effective tangible method to destroy all growing media pests is performed. At defined intervals green house standing crops are provisioned with preventive treatment by a cost effective non toxic material and/or by a cost effective method to destroy all disease bacteria, pathogens, harmful insect and pests.

Module Z3 offers best integrated pest management by maintaining green house relative humidity at ~80%. No condensation or mist on greenhouse covers film and gutters' interior surfaces. no water drops dripping on to plants, no plants injury, no dense fog in greenhouse, minimal pressure of disease, organisms bacteria pathogens, fungi, viral infection, harmful insect, pests no reduction in light transmission into greenhouse and obviating use of toxic crop protection agents saving their and spraying labours' substantial cost and labours' health hazards and non toxic food production.

During dark hours, Z5 greenhouse carbon dioxide sensor trigger-on release manifold to release into greenhouse, oxygen rich dehumidified conditioned greenhouse air already stored in 2nd compartment Eo, to serve plants' dire need for oxygen rich environment to respirate and rejuvenate plants health vigor and strong immune system maximizing plants' tolerance to disease, organisms, bacteria, pathogens, fungi, viral infection, harmful insect pests.

Present innovative greenhouse being just like air conditioned premises leading, efficiently preventing ingress of pests and pathogens into greenhouse much more efficient biological control.

According to the seventeenth embodiment Z7 being equipped with cost effective tangible means and/or by cost effective tangible methods to eliminate gutters' together with all gutters' related problems in a multibay greenhouse leading to no blocking of incoming sunlight energy into greenhouse, no condensation, no mist on gutters interior surfaces, no water drop dripping, on to plants, no plant injury, no snow accumulation in gutters, no very heavy down pour of water, overflowing on greenhouse roofs and along sides, no entry of rain water into greenhouse, no damage to crops inside, no dust/dirt accumulation in gutters, no algae, fungi growth in gutters.

Similarly in multibay structures and installations for numerous applications and needs, there is no very heavy down pour of water overflowing on structures roofs and along sides, no entry of rain water into structures, no damage to materials inside, no snow accumulation in structures' gutters'.

According to the eighteenth embodiment Z7 equipped with cost effective tangible method to maintain optimal insulation between two layers of inflated double layer polyethylene greenhouse cover film which is critical for increased thermal efficiency and to reduce heat loss and thermal energy cost. Double layer polyethylene greenhouse cover film total area is divided into horizontal and vertical segments of ~2 square meters and ~3 mm wide thermal sealing is done after each segment is inflated to ensure that each segment is fully insulated from all other segments. Leaking segment can be visually identified and easily repaired.

According to the nineteenth embodiment Z7 equipped with cost effective tangible means and/or by a cost effective tangible method to use smaller wall thickness and smaller diameter, cheaper galvanized iron pipes filled with sand (ends sealed to ensure no escape of sand) in place of costly large wall thickness C-class and large diameter galvanized iron pipes. They both serve same objective. So, by using smaller wall thickness and smaller diameter, cheaper galvanized iron pipes filled with sand, considerable cost is saved.

**Claims**

1. A method for controlling the environment in a multi bay structured greenhouse wherein the method includes equipping the greenhouse with a first module (Z1), a second module (Z2) and a fifth module (Z5), wherein the first module (Z1) comprises:

   a capture manifold suitable for capturing carbon dioxide rich greenhouse air during dark hours, and oxygen rich greenhouse air during sunlight hours:

      a compressor suitable for compressing the captured greenhouse air;
      a tank (T1) and a tank (T2) suitable for dehumidification of compressed greenhouse air, or for maintaining the compressed greenhouse air almost dry;
      a release manifold suitable for releasing into the greenhouse the carbon dioxide rich dehumidified or almost dry conditioned greenhouse air during the sunlight hours, and the oxygen rich dehumidified or almost dry conditioned greenhouse air during the dark hours, and
      a tank (Ta) which is suitable for storing and dehumidifying compressed atmospheric air, for release into the greenhouse to maintain a balance between carbon dioxide and oxygen,

   **characterized in that**
   the second module (Z2) comprises an earth tube heat exchanger and a greenhouse air temperature sensor, which function with the capture manifold, the compressor, the tanks (T1, T2) and the release manifold of the first module (Zl); wherein the earth tube heat exchanger comprises four separate compartments; wherein:

      - a first compartment (Ec) for storing the tanks' (T1, T2) dehumidified carbon dioxide rich greenhouse air,
      - a second compartment (Eo) for storing the tanks' (T1, T2) dehumidified oxygen rich greenhouse air,
      - a third compartment (Ecd) for storing the tanks' (T1, T2) almost dry carbon dioxide rich greenhouse air, and
      - a fourth compartment (Eod) for storing the tanks' (T1, T2) almost dry oxygen rich greenhouse air; and

   wherein the components of the second module are suitable for conditioning relatively cooler greenhouse air to relatively warmer in cold locations and for conditioning relatively warmer greenhouse air to relatively cooler in hot locations and maintain the greenhouse air temperature at a defined temperature point which is equal to the earth tube heat exchanger average thermal constant temperature of the location;
   wherein the fifth module (Z5) comprises a carbon dioxide sensor which functions with the components of the first module (Z1) and the earth tube heat exchanger of the second module (Z2) for reducing global warming by preventing the greenhouse carbon dioxide from being released into atmosphere by capturing, compressing, dehumidifying, storing and utilizing the greenhouse carbon dioxide for enrichment during sunlight hours for maximizing the yield and for maintaining the greenhouse carbon dioxide content at a defined carbon dioxide content point that is equal to the atmospheric carbon dioxide content point,
wherein when the greenhouse carbon dioxide content is higher than the defined carbon dioxide content point due to carbon dioxide released by plants during dark hours or due to residual carbon dioxide available after carbon dioxide enrichment events of the sun light hours, the method comprises the steps of:

- switching-on the said components of the first module (Z1) and said earth tube heat exchanger of the second module (Z2) using the greenhouse carbon dioxide sensor;
- capturing carbon dioxide rich greenhouse air using the capture manifold;
- compressing the captured carbon dioxide rich greenhouse air using the compressor; dehumidifying the compressed carbon dioxide rich greenhouse air in the tanks; storing the carbon dioxide rich dehumidified greenhouse air into the first compartment (Ec) of the earth tube heat exchanger; and
- releasing into the greenhouse, using the release manifold, the oxygen rich dehumidified conditioned greenhouse air already stored in the second compartment (Eo) of the earth tube heat exchanger; for maintaining the greenhouse carbon dioxide content at a defined carbon dioxide content point which is equal to the atmospheric carbon dioxide content.

2. The method for controlling the environment in a multi bay structured greenhouse as claimed in claim 1, wherein compressed greenhouse air or compressed atmospheric air is maintained at an optimal dehumidification or almost dry; wherein each of the tanks (T1, T2, Ta) is provided with a moisture drain off valve suitable for draining off moisture content for dehumidification or for draining off moisture content suitable for maintaining almost dry greenhouse air in the tanks (T1, T2) and dehumidified atmospheric air in the tank (Ta), and wherein the moisture drain off valves are switched-on by a greenhouse air relative humidity sensor.

3. The method for controlling the environment in a multi bay structured greenhouse as claimed in claim 1, wherein the method includes melting snow on exterior surfaces of a film covering the greenhouse roof and in gutters; wherein the greenhouse is equipped with a heating manifold; together with a weather station comprising an atmospheric solar radiation sensor, an atmospheric air temperature sensor and a rain detector; wherein when the atmospheric air temperature sensor senses that the atmospheric air temperature is approaching 0°C, it switches on pressurized hot air injections into the heating manifold for heating interior surfaces of the film covering the greenhouse roof and interior surface of the gutters.

4. The method for controlling the environment in a multi bay structured greenhouse as claimed in claim 1, wherein the method includes harnessing geo-thermal energy for green house supplementary heating in cold locations; the method further including the step of using a fourth module (Z4) which comprises a geo-thermal energy harnessing automated equipment comprising of two identical geo-thermal energy harnessing tanks, a first fresh dosing tank and a second spent dosing tank, a hot air tank and a carbon dioxide tank, wherein these components function with components of the first module (Z1) with components of a sixth module (Z6).

**Patentansprüche**

1. Verfahren zur Steuerung der Umwelt in einem Multi-Bucht-Gewächshaus, wobei das Verfahren umfasst Versehen des Gewächshauses mit einem ersten Modul (Z1), einem zweiten Modul (Z2) und einem fünften Modul (Z5), wobei das erste Modul (Z1) umfasst:

eine Erfassungssammelleitung, die geeignet ist, um die kohlenstoffdioxidreiche Gewächshausluft während der Nachtstunden und sauerstoffreiche Gewächshausluft während der Sonnenstunden zu sammeln;
einen Kompressor, der geeignet ist, um die gesammelte Gewächshausluft zu komprimieren;
einen Behälter (T1) und einen Behälter (T2), die geeignet sind zur Entfeuchtung der komprimierten Gewächshausluft oder zum Halten der komprimierten Gewächshausluft nahezu trocken;
eine Entladungssammelleitung, die geeignet ist, um in das Gewächshaus die kohlendioxidreiche, entfeuchtete oder nahezu trockene behandelte Gewächshausluft während der Sonnenlichtstunden zu lassen und um die sauerstoffreiche, entfeuchtete oder nahezu trockene behandelte Gewächshausluft während der Nachtstunden zu lassen, und
einen Behälter (Ta), der geeignet ist, um die komprimierte atmosphärische Luft zu speichern und zu trocknen um sie in das Gewächshaus zu lassen, um ein Gleichgewicht zwischen Kohlenstoffdioxid und Sauerstoff aufrechtzuhalten,
**dadurch gekennzeichnet, dass**

das zweite Modul (Z2) einen Erdrohrwärmetauscher und einen Gewächshauslufttemperatursensor umfasst, welche mit der Erfassungssammelleitung, dem Kompressor, den Behältern (T1, T2) und der Entladungssammelleitung des ersten Moduls (Z1) zusammenwirken, wobei der Erdrohrwärmetauscher vier getrennte Kammern umfasst, wobei:

- eine erste Kammer (Ec) zum Speichern der Behälter' (T1, T2) entfeuchteter kohlenstoffdioxidreiche Gewächshausluft,
- eine zweite Kammer (Eo) zum Speichern entfeuchteter sauerstoffreicher Gewächshausluft der Behälter (T1, T2),
- einen dritten Behälter (Ecd) zum Speichern nahezu trockener kohlenstoffdioxidreicher Gewächshausluft der Behälter (T1, T2), und
- eine vierte Kammer (Eod) zum Speichern der nahezu trockenen sauerstoffreichen Gewächshausluft der Behälter (T1, T2); und

wobei die Komponenten des zweiten Moduls geeignet sind, um die relativ kältere Gewächshausluft zu relativ wärmerer an kalten Orten zu behandeln und um relativ wärmere Gewächshausluft zu relativ kälterer an heißen Orten zu behandeln und um die Gewächshaustemperatur bei einem vorgegebenen Temperaturpunkt zu halten, der gleich der Erdrohrwärmetauscher Durchschnittstemperatur konstanten Temperatur des Ortes ist;
wobei das fünfte Modul (Z5) einen Kohlenstoffdioxidsensor umfasst, der mit den Komponenten des ersten Moduls (Z1) und dem Erdrohrwärmetauscher des zweiten Moduls (Z2) zum Reduzieren der globalen Erwärmung zusammenwirkt durch Verhindern, dass Gewächshauskohlenstoffdioxid in die Atmosphäre entladen wird durch Sammeln, Komprimieren, Entfeuchten, Speichern und Verwenden des Gewächshauskohlenstoffdioxids zur Anreicherung während Sonnenstunden zum Maximieren des Ertrags und zum Aufrechterhalten des Gewächshauskohlenstoffdioxidanteils bei einem vorgegebenen Kohlenstoffdioxidanteilspunkt, der gleich dem atmosphärischen Kohlenstoffdioxidanteilspunkt ist,
wobei, wenn der Gewächshauskohlenstoffdioxidanteil größer ist als der vorgegebene Kohlenstoffdioxidanteilspunkt aufgrund von Kohlenstoffdioxid, das von den Pflanzen während der dunklen Stunden abgegeben wird oder aufgrund des verbleibenden Kohlenstoffdioxids, welches verfügbar ist nach der Kohlenstoffdioxidanreicherung während der Sonnenlichtstunden, das Verfahren die Schritte umfasst:

- Einschalten der Komponenten des ersten Moduls (Z1) und des Erdrohrwärmetauschern des zweiten Moduls (Z2) unter Verwendung des Gewächshauskohlenstoffdioxidsensors;
- Sammeln der kohlenstoffdioxidreichen Gewächshausluft unter Verwendung der Erfassungssammelleitung;
- Komprimieren der gesammelten kohlenstoffdioxidreichen Gewächshausluft unter Verwendung des Kompressors;
- Entfeuchten der komprimierten kohlenstoffdioxidreichen Gewächshausluft in den Behältern;
- Speichern der kohlenstoffdioxidreichen entfeuchteten Gewächshausluft in der ersten Kammer (Ec) des Erdrohrwärmetauschers; und
- Entladen in das Gewächshaus unter Verwendung der Entladungssammelleitung der sauerstoffreichen, entfeuchteten Gewächshausluft, die bereits in der zweiten Kammer (Eo) des Erdrohrwärmetauschers gespeichert wurde, um den Gewächshauskohlenstoffdioxidanteil bei einem vorgegebenen Kohlenstoffdioxidanteilspunkt zu halten, der gleich dem atmosphärischen Kohlenstoffdioxidanteil ist.

2. Verfahren zur Steuerung der Umwelt in einem Multi-Bucht-Gewächshaus nach Anspruch 1, wobei die komprimierte Gewächshausluft oder die komprimierte atmosphärische Luft bei einer optimalen Endvorrichtung oder nahezu trocken gehalten wird; wobei jeder der Behälter (T1, T2, Ta) mit einem Feuchtigkeitsabfließventil versehen ist, das geeignet ist, zum Ablaufenlassen von Feuchtigkeitsanteilen bei der Entfeuchtung oder zum Ablaufenlassen des Feuchtigkeitsanteils, der geeignet ist, um eine nahezu trockene Gewächshausluft in den Behältern (T1, T2) zu halten und entfeuchtete atmosphärische Luft in dem Behälter (Ta) und wobei die Feuchtigkeitsablaufventile durch einen Gewächshausluft Relativfeuchtigkeitssensor eingeschaltet werden.

3. Verfahren zur Steuerung der Umwelt in einem Multi-Bucht-Gewächshaus nach Anspruch 1, bei dem das Verfahren das Schmelzen von Schnee auf äußeren Oberflächen einer Folie, die das Gewächshausdach abdeckt und in Dachrinnen umfasst, wobei das Gewächshaus mit einer Heizsammelleitung versehen ist; gemeinsam mit einer Wetterstation umfassend einen atmosphärischen Sonnenstrahlungssensor, einen atmosphärischen Lufttemperatursensor und einen Regendetektor; wobei, wenn der atmosphärische Lufttemperatursensor erfasst, dass die atmosphärische Lufttemperatur 0°C erreicht, der mit Druck beaufschlagte Heißluftinjektionen in die Heizsammelleitung zum Heizen der inneren Oberflächen der Folie, die das Gewächshausdach und die innere Oberfläche der Regenrinnen abdeckt, einschaltet.

4. Verfahren zur Steuerung der Umwelt in einem Multi-Bucht-Gewächshaus nach Anspruch 1, bei dem das Verfahren das Nutzbarmachen von geothermischer Energie für eine Gewächshausunterstützungsheizung an kalten Orten umfasst; das Verfahren umfasst ferner den Schritt des Verwendens eines vierten Moduls (Z4), welches eine Geothermieenergienutzbarmachungsautomatisierungseinrichtung umfasst, die zwei identische Geothermieenergienutzbarmachungsbehälter, einen ersten frische Dosierungsbehälter und einen zweiten verbraucht Dosierungsbehälter, einen Heißluftbehälter und einen Kohlenstoffdioxidbehälter umfasst, wobei diese Komponenten mit Komponenten des ersten Moduls (Z1) mit Komponenten eines sechsten Moduls (Z6) zusammenwirken.

**Revendications**

1. Méthode de contrôle de l'environnement dans une serre structurée multi-baies, dans laquelle la méthode inclut équiper la serre d'un premier module (Z1), d'un deuxième module (Z2) et d'un cinquième module (Z5), dans laquelle le module (Z1) comprend:

un collecteur de capture adapté pour capter l'air de serre riche en dioxyde de carbone pendant les heures sombres et l'oxygène de serre riche en oxygène pendant les heures d'ensoleillement:

un compresseur adapté à la compression de l'air de serre capturé ;
un réservoir (T1) et un réservoir (T2) adaptés à la déshumidification de l'air comprimé de serre ou au maintien quasi sec de l'air comprimé de la serre;
un collecteur de libération adapté à libérer dans la serre de l'air conditionné de serre déshumidifié ou presque sec riche en dioxyde de carbone pendant les heures d'ensoleillement, et l'air conditionné de la serre déshumidifié ou presque sec riche en oxygène pendant les heures sombres, et
un réservoir (Ta) adapté pour stocker et déshumidifier l'air atmosphérique comprimé, afin qu'il soit relâché dans la serre pour maintenir l'équilibre entre le dioxyde de carbone et l'oxygène,

**caractérisé en ce que**
le second module (Z2) comprend un échangeur de chaleur à tube de terre et un capteur de température d'air de serre, qui fonctionnent avec le collecteur de capture, le compresseur, les réservoirs (T1, T2) et le collecteur de libération du premier module (Z1); dans lequel l'échangeur de chaleur à tube de terre comprend quatre compartiments séparés ; dont :

- un premier compartiment (Ec) pour stocker l'air de serre riche en dioxyde de carbone déshumidifié des réservoirs (T1, T2),
- un deuxième compartiment (Eo) pour stocker l'air de serre riche en oxygène déshumidifié des réservoirs (T1, T2),
- un troisième compartiment (Ecd) pour stocker l'air de serre riche en dioxyde de carbone presque sec des réservoirs (T1, T2), et
- un quatrième compartiment (Eod) pour stocker l'air de serre riche en oxygène presque sec des réservoirs (T1, T2); et

dans laquelle les composants du second module sont adaptés pour conditionner de l'air de serre relativement plus froid que de l'air relativement plus chaud dans des emplacements froids et pour conditionner de l'air de serre relativement plus chaud que de l'air relativement plus froid dans des emplacements chauds et maintenir la température de l'air dans la serre à un point de température défini égal à la température constante thermique moyenne de l'échangeur de chaleur à tube de terre de l'emplacement;
dans laquelle le cinquième module (Z5) comprend un capteur de dioxyde de carbone qui fonctionne avec les composants du premier module (Z1) et l'échangeur de chaleur à tube de terre du deuxième module (Z2) pour réduire le réchauffement de la planète en empêchant le dégagement de dioxyde de carbone de serre dans l'atmosphère en capturant, comprimant, déshumidifiant, stockant et utilisant le dioxyde de carbone de serre pour l'enrichissement pendant les heures d'ensoleillement afin de maximiser le rendement et de maintenir la teneur en dioxyde de carbone de serre à un point défini de teneur en dioxyde de carbone égal au point de teneur en dioxyde de carbone atmosphérique,
dans lequel, lorsque la teneur en dioxyde de carbone de serre est supérieure au point défini de teneur en dioxyde de carbone en raison du dioxyde de carbone libéré par les plantes pendant les heures d'obscurité ou en raison du dioxyde de carbone résiduel disponible après les événements d'enrichissement en dioxyde de carbone des heures d'ensoleillement, le procédé comprend les étapes de :

- allumer lesdits composants du premier module (Z1) et ledit échangeur de chaleur à tube de terre du deuxième module (Z2) à l'aide du capteur de dioxyde de carbone de serre;
- capturer l'air de serre riche en dioxyde de carbone à l'aide du collecteur de capture;
- comprimer l'air de serre riche en dioxyde de carbone capturé à l'aide du compresseur; déshumidifier l'air de serre riche en dioxyde de carbone comprimé dans les réservoirs; stocker l'air de serre déshumidifié riche en dioxyde de carbone dans le premier compartiment (Ec) de l'échangeur de chaleur à tube de terre; et
- libérer dans la serre, à l'aide du collecteur de libération, l'air de serre conditionné déshumidifié riche en oxygène déjà stocké dans le deuxième compartiment (Eo) de l'échangeur de chaleur à tube de terre; pour maintenir la teneur en dioxyde de carbone de serre à un point défini correspondant à la teneur en dioxyde de carbone atmosphérique.

**2.** Méthode de contrôle de l'environnement dans une serre structurée multi-baies selon la revendication 1, dans laquelle l'air comprimé de serre ou de l'air comprimé atmosphérique est maintenu à une déshumidification optimale ou presque à sec; dans laquelle chacun des réservoirs (Tl, T2, Ta) est pourvu d'une vanne d'évacuation d'humidité adaptée pour évacuer la teneur en humidité pour la déshumidification ou pour évacuer la teneur en humidité apte à maintenir de l'air de serre presque sec dans les réservoirs (Tl, T2) et l'air atmosphérique déshumidifié dans le réservoir (Ta), et dans lequel les vannes d'évacuation d'humidité sont mises en fonctionnement par un capteur d'humidité relative d'air de serre.

**3.** Méthode de contrôle de l'environnement dans une serre structurée multi-baies selon la revendication 1, dans laquelle la méthode inclut faire fondre de la neige sur des surfaces extérieures d'un film recouvrant le toit de la serre et dans des gouttières; dans laquelle la serre est équipée d'un collecteur de chauffage; conjointement avec une station météorologique comprenant un capteur de rayonnement solaire atmosphérique, un capteur de température d'air atmosphérique et un détecteur de pluie; dans laquelle, lorsque le capteur de température d'air atmosphérique détecte que la température d'air atmosphérique approche de 0 ° C, il met en fonctionnement des injections d'air chaud sous pression dans le collecteur de chauffage pour chauffer les surfaces intérieures du film recouvrant le toit de la serre et la surface intérieure des gouttières.

**4.** Méthode de contrôle de l'environnement dans une serre structurée multi-baies selon la revendication 1, dans laquelle la méthode inclut maîtrise l'énergie géothermique pour le chauffage supplémentaire de serre aux emplacements froids; la méthode incluant en outre l'étape d'utiliser un quatrième module (Z4) qui comprend un équipement automatisé de maîtrise d'énergie géothermique comprenant deux réservoirs de maîtrise d'énergie géothermique identiques, un premier réservoir de dosage frais et un deuxième réservoir de dosage épuisé, un réservoir d'air chaud et un réservoir de dioxyde de carbone, dans lesquels ces composants fonctionnent avec des composants du premier module (Z1) avec des composants d'un sixième module (Z6) .

**EP 2 892 320 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20110041395 A
- US 5713154 A
- US 20080087165 A